# DEMANDE DE BREVET EUROPEEN

(11) **EP 1 333 244 A1**
(43) Date de publication de la demande: **06.08.2003**
(21) Numéro de dépôt: 02447018.9
(22) Date de dépôt: 01.02.2002
(51) Int. Cl.: G01B 5/24

(54) **Dispositif et procédé de contrôle de précision de la position de fentes**

(71) Demandeur: Techspace Aero S.A., 4041 Herstal (BE)
(72) Inventeur: Stroobandts, Georges, 4351 Remicourt (BE)
(74) Mandataire: Van Malderen, Joelle

(57) **Abrégé**

La présente invention se rapporte à un dispositif de calibrage destiné au contrôle de précision de la position et/ou orientation de fentes ou rainures (101,102,103,...) disposées sur une pièce segmentée (100) à contrôler, ledit dispositif comprenant au moins:
- des moyens de fixation (400,401) de ladite pièce à contrôler sur le dispositif;
- un jeu de positionneurs (410,420,430,...) comprenant chacun plusieurs comparateurs (501,502,503,...) munis de palpeurs se présentant sous la forme de tige (511,512,513,...) avec une extrémité libre (701) qui possède une surface sphérique ou cylindrique;
- des goupilles rectifiées (111,112) capables de se positionner dans lesdites fentes ou rainures (101,102,103,104,...), lesdites goupilles présentant un diamètre plus grand que la dimension à contrôler;
ledit dispositif étant conçu de manière telle que lesdits palpeurs entrent en contact de manière indirecte, via leur extrémité libre, avec une ou plusieurs desdites goupilles rectifiées (111,112).

La présente invention se rapporte également au procédé utilisant ledit dispositif.

## Description

### Objet de l'invention

La présente invention se rapporte à un dispositif et à un procédé de contrôle de précision de la position de fentes, et en particulier de fentes de faible largeur.

### Etat de la technique

Pour des applications spécifiques telles que la fabrication de turbines destinées à des turboréacteurs qui comprennent des parties rotoriques et des parties statoriques, il est parfois indispensable de vérifier et de contrôler la position exacte de fentes ou de rainures.

En effet, on a l'habitude de réaliser la partie statorique de telles turbines sous la forme d'un ensemble de pièces segmentées dans le sens circonférentiel qui seront ajustées les unes aux autres en vue d'obtenir ladite partie statorique.

Pour effectuer cet assemblage, on prévoit des rainures disposées sur la section desdites pièces segmentées.

L'assemblage se fait alors par insertion de languettes métalliques jouant en outre le rôle de joints d'étanchéité statique.

Néanmoins, afin que cette étanchéité statique soit totalement assurée, il est indispensable que la position effective des rainures soit très précisément celle qui était prévue.

Ces rainures ou fentes possèdent diverses caractéristiques qui sont en particulier de présenter une faible ou très faible largeur, typiquement inférieure à 0,4 mm, et dont la position et l'orientation doivent être reproduites avec précision sur ladite pièce segmentée.

Dans ce but, on vérifie si la position d'une des faces de cette rainure, et non le plan moyen de symétrie, possède la précision requise typiquement de l'ordre de 0,05 mm par rapport à un système de référence géométrique connu de ladite pièce.

Ceci fait appel à un système de mesure qui nécessite la présence d'au moins un comparateur muni d'un palpeur qui entre en contact mécanique sous la forme plan/plan avec la zone de la pièce à contrôler.

Le procédé de contrôle qui permet le calibrage du contrôle nécessite de ce fait la présence de plusieurs comparateurs disposés à proximité des zones qui correspondent aux rainures de la pièce dont la position et l'orientation sont à contrôler.

De tels comparateurs déjà connus selon l'état de la technique pour une telle application comprennent un cadran mécanique ou digital et un palpeur se présentant sous le forme d'une tige dont l'extrémité est rectifiée, ladite tige étant disposée dans un plan parallèle à la zone de la pièce à contrôler. L'extrémité de cette tige est rectifiée de manière à réduire suffisamment l'épaisseur dudit palpeur pour permettre son introduction dans la rainure à contrôler.

En pratique, ceci est particulièrement difficile à réaliser, essentiellement pour deux raisons : la faible largeur de la rainure à contrôler et l'existence de contact palpeur/pièce à contrôler du type plan/plan susceptible d'être exposé à un désaxage éventuel lors de la mesure.

En outre, le procédé nécessite la présence d'un dispositif de positionnement adéquat de la pièce, par exemple, d'un dispositif présentant des appuis isostatiques et à bridage adéquat, de même que la présence d'un étalon destiné à permettre chaque fois une remise à zéro desdits comparateurs avant toute prise de mesure dans le but d'effectuer une mesure différentielle par comparaison.

Le procédé de contrôle selon l'état de la technique présente ainsi de nombreux inconvénients dont, entre autres, le fait que le contrôle est entaché d'erreurs liées à l'alignement imparfait des rainures à contrôler qui entraîne un non-parallélisme du palpeur par rapport à la zone palpée.

Ce défaut de parallélisme peut notamment être différent de celui qui est présent entre le palpeur et l'étalon. Ceci est dû au fait que le contact palpeur/pièce à contrôler est de type plan/plan et non pas de type cylindre/plan.

En outre, on observe que la rectification de l'extrémité du palpeur requiert un positionnement de la zone à rectifier par rapport à l'axe d'articulation de la tige. Cela induit une opération particulièrement difficile à réaliser, donc coûteuse, et spécifique pour chaque comparateur utilisé.

La rectification du bout de la tige du comparateur réduit notablement son épaisseur et induit de ce fait une certaine fragilisation qui pourrait être préjudiciable à sa durée de vie dans un contexte d'utilisation normale dans un atelier de fabrication mécanique.

La conjonction des deux inconvénients repris ci-dessus (difficulté d'exécution et fragilité) limite fortement la disponibilité opérationnelle des calibres faisant appel à ce type de technologie. Leur coût de maintenance est également élevé pour les mêmes raisons.

Enfin, la parallélisme requis entre la face rectifiée et l'axe de pivotement de la tige fixe la position des comparateurs sur un moyen de contrôle. Il s'ensuit donc une disposition des comparateurs dictée par la géométrie de la pièce et non par des facteurs ergonomiques. La lisibilité desdits comparateurs s'en trouve dès lors largement compromise.

### Buts de l'invention

La présente invention vise à fournir un dispositif et un procédé de contrôle de position avec précision de rainures ou fentes, et en particulier de rainures ou fentes présentes sur des pièces segmentées servant à réaliser la ou les parties statoriques d'un turboréacteur, qui ne présentent pas les inconvénients de l'état de la technique.

En particulier, la présente invention vise à proposer un procédé qui utilise des palpeurs qui évite les risques de désaxage au niveau du contact palpeur/pièce à contrôler.

La présente invention vise également à éviter la nécessité d'une rectification du bout (de l'extrémité) du palpeur et donc d'augmenter la robustesse dudit dispositif de contrôle.

### Principaux éléments caractéristiques de l'invention

La présente invention se rapporte à un dispositif de calibrage destiné au contrôle de précision de la position de fentes ou rainures disposées sur une pièce segmentée, comprenant de manière classique des moyens de fixation de ladite pièce et des moyens de contrôle de la position et/ou de l'orientation desdites fentes ou rainures comprenant une pluralité de positionneurs ajustables par translation, chaque positionneur comprenant au moins un comparateur disposé sur un socle et muni d'un palpeur se présentant sous la forme d'une tige avec une extrémité libre. Cette extrémité libre des palpeurs présente avantageusement une surface sphérique ou cylindrique.

En outre, l'invention est caractérisée en ce que ledit palpeur est en liaison (indirecte) avec une ou plusieurs goupilles rectifiées se positionnant dans lesdites fentes ou rainures, lesdites goupilles présentant un diamètre plus grand que la dimension à contrôler.

De manière avantageuse, les goupilles sont en liaison avec les palpeurs par l'intermédiaire d'un dispositif intermédiaire de renvoi d'angle et de transmission de mouvement.

De préférence, ledit dispositif intermédiaire de renvoi d'angle et de transmission de mouvement comprend au moins une butée supportant une goupille en position et orientation déterminées. Cette butée est solidarisée au socle du comparateur par un système mécanique à ressort de rappel.

Avantageusement, le socle du comparateur est ajustable par translation.

L'invention se rapporte également à un procédé de contrôle de précision de la position de fentes ou rainures sur des pièces segmentées utilisant ledit dispositif de calibrage, caractérisé en ce que :
- on réalise un étalon présentant des surfaces de référence planes disposées de manière calibrée et correspondant à la position théorique desdites fentes ou rainures à contrôler;
- on dispose le long desdites surfaces de références planes les goupilles rectifiées du dispositif de calibrage;
- on dispose ledit étalon dans le dispositif de calibrage et on le fixe à l'aide des moyens de fixation;
- on effectue, à l'aide des comparateurs munis des palpeurs qui entrent en liaison avec les goupilles rectifiées, une première mesure correspondant à un réglage des positions de référence desdites goupilles;
- on retire ledit étalon et on dispose à sa place ladite pièce à contrôler que l'on fixe à l'aide desdits moyens de fixation sur le dispositif de calibrage;
- on effectue, à l'aide des comparateurs munis des palpeurs qui entrent en liaison avec lesdites goupilles disposées dans les rainures de la pièce à contrôler, une seconde mesure, et
- on effectue finalement une comparaison entre la première et la seconde mesure.

### Brève description des figures

La figure 1 décrit une pièce segmentée qui présente des rainures ou fentes dont on souhaite vérifier et contrôler avec précision la position et/ou l'orientation.

La figure 2 représente une pièce étalon correspondant à la figure 1 munie des fentes ou rainures aux positions requises.

La figure 3 décrit le dispositif de contrôle selon la présente invention destiné à permettre le contrôle de la position de fentes ou rainures avec précision d'une pièce telle que décrite à la figure 1 en se basant sur une mesure de référence effectuée à l'aide d'une pièce telle que décrite à la figure 2.

Les figures 4 et 5 représentent des vues de détail de formes d'exécution particulières d'éléments constituant le dispositif décrit à la figure 3.

### Description d'une forme d'exécution préférée de l'invention

La présente invention sera décrite en détail en se référant aux diverses figures dans lesquelles des repères numériques identiques ont été utilisés pour des éléments similaires.

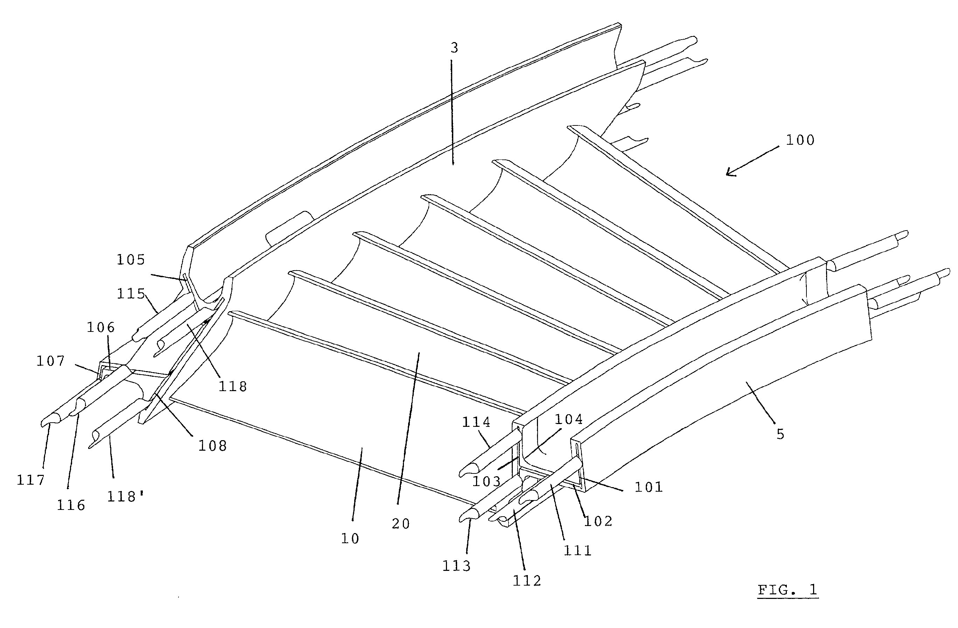

La figure 1 décrit une pièce segmentée 100 destinée à réaliser la partie statorique d'une turbine d'un turboréacteur.

Une telle pièce segmentée 100 comporte de manière classique une première partie de couronne extérieure 3 et une seconde partie de couronne intérieure 5, reliées entre elles par une série d'aubes 10,20,30, ...

Pour réaliser la partie statorique, il suffira d'assembler plusieurs pièces 100 telles que décrites à la figure 1 de manière à former un élément comprenant une couronne interne et une couronne externe reliées par les aubes statiques.

Pour réaliser cet assemblage, on a prévu des rainures 101,102,103,104 sur la couronne interne et des rainures 105,106,107,108 sur la couronne externe. De fines languettes métalliques (non représentées) vont ainsi pouvoir se positionner dans les rainures de la pièce 100 et s'adapter à leur autre extrémité dans les rainures correspondantes de la pièce segmentée adjacente en vue de solidariser les pièces entre elles. Dans l'exemple d'exécution considéré, la pièce segmentée 100 comporte sur chacune de ses faces deux sections présentant chacune 4 rainures par face, à savoir les 4 rainures 101,102,103,104 pour la partie de section correspondant à la couronne interne et 4 rainures 105,106,107,108 pour la partie de section correspondant à la couronne externe.

Afin d'obtenir une étanchéité statique maximale, il est indispensable que lesdites rainures 101,102,103, ... soient réalisées de manière à présenter une position et une orientation déterminées et ceci avec la plus grande précision possible par rapport à une valeur étalon.

Afin de vérifier la position desdites rainures, on dispose dans celles-ci des goupilles cylindriques correspondantes 111, 112, 113, 114, 115, 116, 117, 118, 118', c'est-à-dire dans le cas présent 9 goupilles par face, car deux goupilles 118 et 118' sont utilisées pour le positionnement de la longue rainure 108.

Le rôle de ces goupilles qui seront en contact avec les palpeurs et leurs avantages seront expliqués plus en détail ci-dessous.

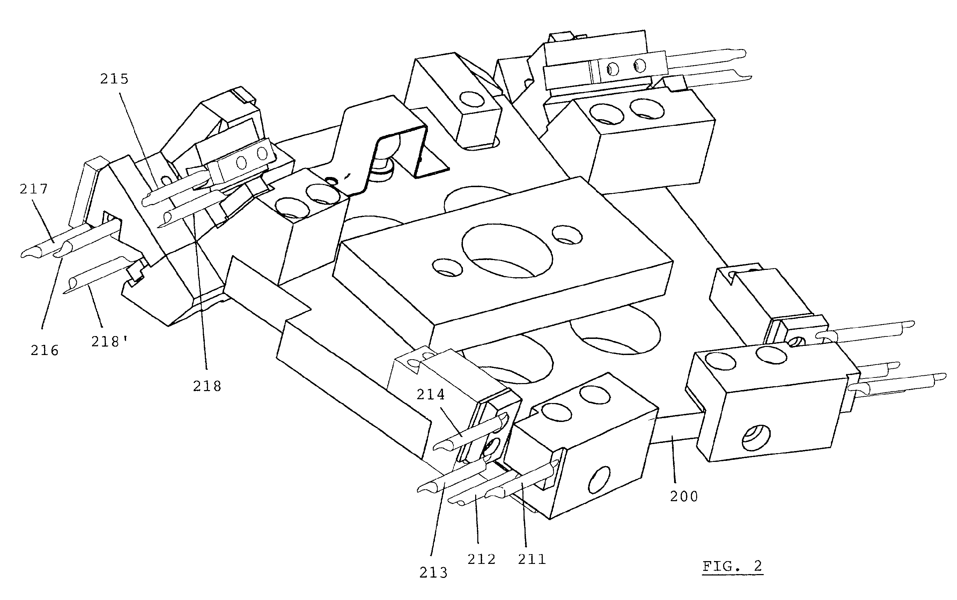

Pour calibrer la position desdites rainures, on a réalisé un modèle étalon 200 tel que représenté à la figure 2 et sur lequel on positionne des goupilles similaires 211,212,213,214,215,216,217,218,218' à celles destinées à la pièce à mesurer. Ces goupilles sont donc placées en position et orientation adéquates, cette position et cette orientation étant calibrées et correspondant à la position et à l'orientation de référence.

De manière particulièrement avantageuse, ces goupilles permettent de matérialiser la position adéquate des rainures disposées sur la pièce segmentée à contrôler.

De manière également particulièrement avantageuse, ces goupilles présentent un diamètre plus grand que la largeur desdites rainures à contrôler et se terminent par une extrémité rectifiée se positionnant dans ladite rainure.

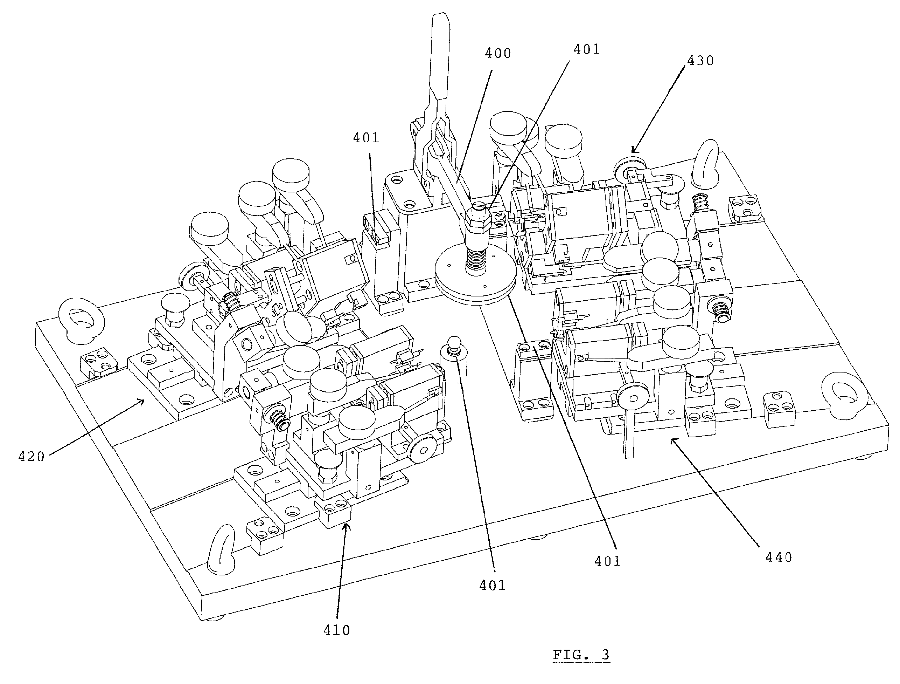

La figure 3 décrit par une vue d'ensemble un outillage ou calibre général de contrôle constitué d'un dispositif qui est prêt à recevoir une pièce qui est soit l'étalon 200 tel que représenté à la figure 2, soit la pièce segmentée 100 telle que représentée à la figure 1.

Ledit dispositif est muni des éléments suivants :
- des moyens de positionnement et de fixation qui comportent un bridage 400 et des appuis isostatiques 401;
- un jeu de 4 positionneurs 410,420,430,440 disposés chacun sur chariot mobile et pourvus chacun de plusieurs comparateurs 501,502,503 qui sont destinés, par l'intermédiaire de palpeurs, à entrer en contact avec les goupilles disposées dans les rainures correspondantes de la pièce segmentée 100 ou de la pièce étalonnée 200 placée en position adéquate.

On effectue au moyen de ce dispositif une mesure différentielle de la position de la pièce 100 par rapport à celle de l'étalon 200.

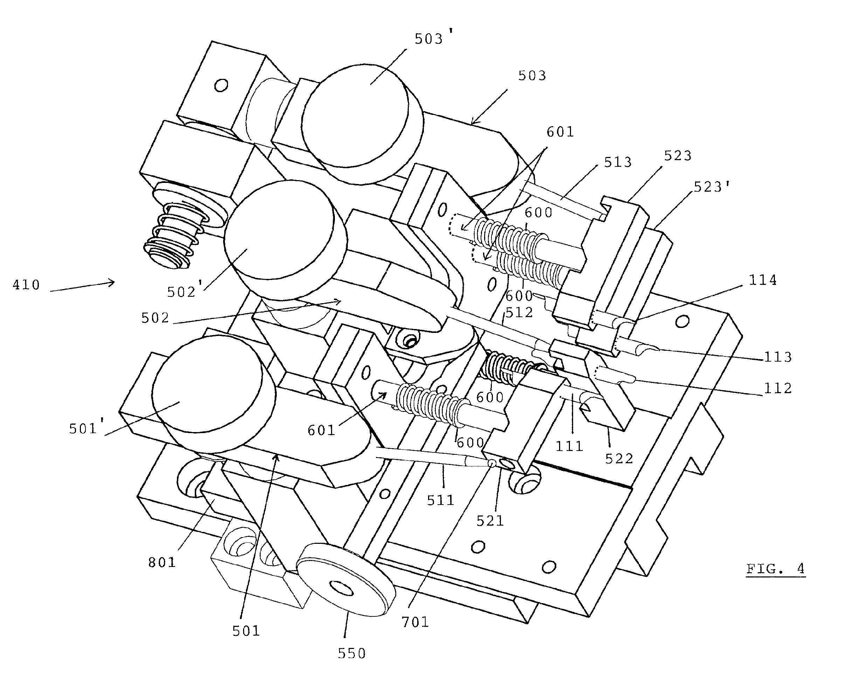

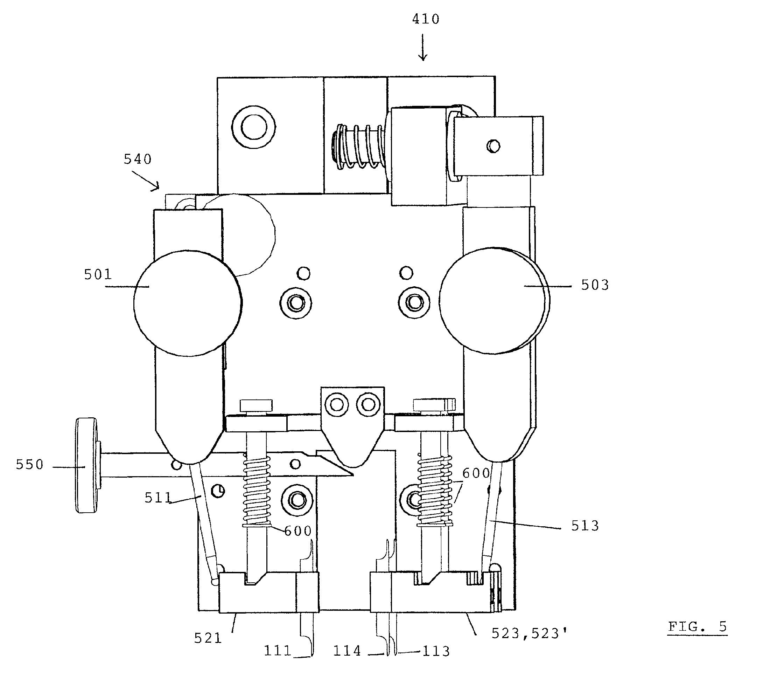

On a représenté plus en détail aux figures 4 et 5 un positionneur, par exemple le positionneur 410 qui présente plusieurs comparateurs 501,502,503 à cadran, respectivement 501',502',503'. Chacun de ces comparateurs 501,502,503 est muni d'un palpeur se présentant essentiellement sous la forme d'une tige 511,512,513 respectivement.

Selon une caractéristique importante, ces palpeurs 511,512,513 présentent une extrémité libre sphérique ou cylindrique. Cette extrémité libre est représentée sur la figure 4 pour le palpeur 511 et porte la référence 701.

Lesdits palpeurs 511,512,513 sont en contact avec lesdites goupilles rectifiées 111,112,113,114 par le biais d'un dispositif intermédiaire de renvoi d'angle et de transmission de mouvement.

Ces dispositifs comprennent essentiellement des butées 521,522,523,523', ainsi que des systèmes 601 à ressort de rappel 600, lesdites butées étant chacune solidarisées au socle des comparateurs 501,502,503 par un système 601 à ressort de rappel 600 de sorte que le contact palpeurs/goupilles est assuré en permanence. On notera que seul le socle 801 du comparateur 501 est figuré sur la figure 4.

Sur les butées sont donc disposées de manière réglable les goupilles rectifiées 111,112,113,114 telles que décrites ci-dessus. Leur position a été ajustée en se référant à l'étalon 200.

On notera que l'un des palpeurs, à savoir le palpeur 513 est associé à deux butées 523 et 523' sur lesquelles sont disposées respectivement les deux goupilles 113 et 114 en vue de permettre le contrôle d'une fente plus longue, par exemple la fente 104.

L'ensemble formé par les comparateurs avec leurs palpeurs se présentant sous forme de tiges et les butées à goupilles est fixé sur un chariot mobile qui peut être amené vers l'avant en manipulant une tige externe 550.

Une vue partielle du dessus de ce dispositif est représentée à la Fig. 5.

La présence de dispositifs intermédiaires comprenant les butées associées aux systèmes mécaniques à ressort de rappel permet de réaliser un contact (indirect) de type cylindre/plan entre les palpeurs et la pièce à contrôler.

En effet, on observera que l'extrémité libre des palpeurs se présente sous la forme sphérique et entre directement en contact avec le dispositif de renvoi d'angle et de transmission de mouvements, c'est-à-dire les butées (associées aux systèmes mécaniques à ressort de rappel).

Ceci permet de manière particulièrement avantageuse de supprimer les défauts d'alignement non parfait des rainures à contrôler de la pièce segmentée par rapport à celle de l'étalon.

En outre, le fait de prévoir une pièce intermédiaire entre la rainure et le palpeur permet de réaliser un dégagement par rectification plane des goupilles.

### Description détaillée du procédé de contrôle

Le procédé de contrôle de précision de la position de fentes ou rainures sur une pièce segmentée à contrôler, comporte les étapes suivantes :
- on réalise un étalon 200 présentant des surfaces de référence planes disposées de manière calibrée et correspondant à la position théorique desdites fentes ou rainures à contrôler;
- on dispose le long desdites surfaces de référence planes les goupilles rectifiées 111,112,113,114 du dispositif de calibrage (dispositif de contrôle) ;
- on dispose et fixe ledit étalon 200 dans le dispositif de calibrage à l'aide des moyens de fixation 400,401 (bridage + appuis isostatiques);
- on effectue une première mesure, à l'aide des comparateurs 501,502,503,... munis chacun d'un palpeur dont l'extrémité libre entre en contact avec lesdites goupilles rectifiées 111,112,113,114,... via les butées associées aux systèmes mécanique à ressort de rappel, ladite première mesure correspondant à un réglage des positions de référence desdites goupilles;
- on retire ledit étalon 200 du dispositif de calibrage;
- on dispose à sa place et on fixe ladite pièce segmentée 100 à contrôler à l'aide desdits moyens de fixation 400,401;
- on effectue une seconde mesure à l'aide desdits comparateurs 501,502,503 munis de leurs palpeurs qui entrent en contact avec les goupilles rectifiées via les butées associées aux systèmes mécanique à ressort de rappel, et
- on effectue finalement une comparaison entre la première mesure et la seconde mesure.

## Revendications

1. Dispositif de calibrage destiné au contrôle de précision de la position et ou orientation de fentes ou rainures (101,102,103,...) disposées sur une pièce segmentée (100) à contrôler, ledit dispositif comprenant au moins :
- des moyens de fixation (400,401) de ladite pièce à contrôler sur le dispositif;
- un jeu de positionneurs (410,420,430,...) comprenant chacun plusieurs comparateurs (501,502,503,...) munis chacun d'un palpeur se présentant sous la forme de tige (511,512,513,...) avec une extrémité libre (701) qui possède une surface sphérique ou cylindrique;
- des goupilles rectifiées (111,112) capables de se positionner dans lesdites fentes ou rainures (101,102,103,104,...), lesdites goupilles présentant un diamètre plus grand que la dimension à contrôler;
ledit dispositif étant conçu de manière telle que lesdits palpeurs entrent en contact de manière indirecte, via leur extrémité libre, avec au moins une goupille rectifiée (111,112).

2. Dispositif selon la revendication 1, **caractérisé en ce que** les goupilles (111,112,...) sont en liaison indirecte avec les palpeurs (511,512,...) par l'intermédiaire d'un dispositif intermédiaire de renvoi d'angle et de transmission de mouvements (521,522,...).

3. Dispositif selon la revendication 2, **caractérisé en ce que** les comparateurs (501,502,503,...) étant munis d'un socle (801), ledit dispositif intermédiaire de renvoi d'angle et de transmission de mouvements (521,522,...) comprend des butées supportant les goupilles (111,112,...) en position et orientation fixes, ainsi que des systèmes mécaniques (601) à ressort de rappel (600), lesdites butées étant solidarisées aux socles (801) des comparateurs (501,502,...) par lesdits systèmes mécaniques (601) à ressort de rappel (600).

4. Dispositif selon la revendication 3, **caractérisé en ce que** le socle (801) des comparateurs (501,502,503,...) est ajustable par translation.

5. Procédé de contrôle de précision de la position de fentes ou de rainures présentes sur une pièce segmentée (100) à contrôler à l'aide du dispositif de calibrage selon l'une quelconque des revendications précédentes, **caractérisé en ce que** :
- on réalise un étalon (200) présentant des surfaces de référence planes disposées de manière calibrée et correspondant à la position théorique desdites fentes ou rainures à contrôler;
- on dispose le long desdites surfaces de référence planes les goupilles rectifiées (111,112,113,114) ;
- on dispose et fixe à l'aide de moyens de fixation (400,401) ledit étalon (200) dans le dispositif de calibrage ;
- on effectue une première mesure, à l'aide des comparateurs (501,502,503,...) munis chacun d'un palpeur se présentant sous la forme d'une tige (511,512,513,...) et entrant en contact avec lesdites goupilles rectifiées (111,112,113,114,...), ladite première mesure correspondant à un réglage des positions de référence desdites goupilles;
- on retire ledit étalon (200) du dispositif de calibrage;
- on dispose à sa place et on fixe à l'aide desdits moyens de fixation (400,401) ladite pièce segmentée (100) à contrôler;
- on effectue une seconde mesure à l'aide desdits comparateurs (501,502,503) munis chacun d'un palpeur se présentant sous la forme d'une tige (511,512,513,...) et entrant en contact avec lesdites goupilles rectifiées (111,112,113,114,...), et
- on effectue finalement une comparaison entre la première mesure et la seconde mesure.
